# EUROPÄISCHE PATENTSCHRIFT

(11) **EP 3 995 355 B1**
(45) Veröffentlichungstag und Bekanntmachung des Hinweises auf die Patenterteilung: **23.07.2025**
(21) Anmeldenummer: 21202137.2
(22) Anmeldetag: 12.10.2021
(51) Int. Cl.: B60N 2/08, B60N 2/07

(54) **VERRIEGELUNGSMECHANISMUS FÜR EINE SITZSCHIENE**
LOCKING MECHANISM FOR A SEAT RAIL
MÉCANISME DE VERROUILLAGE POUR UN RAIL DE SIÈGE

(30) Priorität: 04.11.2020 DE 102020129031
(43) Veröffentlichungstag der Anmeldung: 11.05.2022
(73) Patentinhaber: Brose Sitech Sp. z o.o., 59-101 Polkowice (PL)
(72) Erfinder: Rutkowski, Dawid, 69-300 Lubin (PL); Sulowski, Robert, 67-200 Jaczow (PL); Szecowka, Michal, 53-204 Wroclaw (PL); Klajn, Stanislaw, 54-608 Wroclaw (PL)
(74) Vertreter: Gulde & Partner

(56) Entgegenhaltungen:
- KR-A- 20130 092 176
- KR-B1- 101 872 822
- US-A1- 2016 039 314

## Beschreibung

Die Erfindung betrifft einen Verriegelungsmechanismus einer Sitzschiene, der mindestens eine Oberschiene und eine Unterschiene sowie ein Verriegelungselement umfasst, welches in einem Verriegelungszustand für eine reversible Verriegelung der Sitzschiene sorgt, Die Druckschrift DE 44 36 221 C1 beschreibt eine Verriegelungsvorrichtung für Fahrzeugsitze die auf einer Sitzschiene angeordnet sind, dessen Oberschiene eines Schienenpaares längsverschiebbar in einer mit der Fahrzeugstruktur verbundenen Unterschiene geführt ist, um den Fahrzeugsitz in jeder Stellung innerhalb des Verstellbereiches formschlüssig verriegeln zu können. Die Verriegelungsvorrichtung ist, mit einer Reihe von Rastöffnungen und mehreren in Richtung dieser Reihe hintereinander angeordneten, federbelasteten Riegeln gekennzeichnet. Die Riegel können unabhängig voneinander in die Rastöffnungen einfallen, von denen wenigstens zwei in jeder Position innerhalb des Verstellbereiches der zu verriegelnden, relativ zueinander stufenlos verstellbaren Teile in eine der Rastöffnungen einfallen und diese Teile in beiden Verstellrichtungen spielfrei zu verriegeln vermögen. Dazu weist jeder Riegel zusätzlich zu seiner Bewegbarkeit für das Einfallen in eine der Rastöffnungen eine Bewegbarkeit wenigstens eines der ihn bildenden Teile auf, bei welcher der für eine spielfreie Anlage an der Begrenzungsfläche dieser Rastöffnung vorgesehene Flächenbereich in Anlage an die Begrenzungsfläche gebracht wird, ohne die Eindringtiefe des Riegels in die Rastöffnung zu verändern.

Weitere Verriegelungsmechanismen einer Sitzschiene für Fahrzeugsitze sind aus KR 2013 0092176 A, KR 101 872 822 B1 und US 2016/039314 A1 bekannt.

Der Erfindung liegt nun die Aufgabe zugrunde, einen einfachen und variabel an die in dem Verriegelungsmechanismus aufzunehmenden Kräfte anpassbaren Verriegelungsmechanismus zu schaffen.

Ausgangspunkt der Erfindung ist ein Verriegelungsmechanismus einer Sitzschiene umfassend eine Oberschiene und eine Unterschiene sowie ein Verriegelungselement, welches in einem Verriegelungszustand für eine reversible Verriegelung der Sitzschiene sorgt.

Erfindungsgemäß ist ein Verriegelungsmechanismus nach Anspruch 1 vorgesehen.

Vorteilhaft ist vorgesehen, dass in das Gehäuse ein Schieberelement integriert angeordnet ist.

Das Schieberelement steht mit mindestens einem außerhalb des Gehäuses angeordneten Betätigungselement der Sitzschiene in Verbindung.

Eine Betätigung des Schieberelementes durch das Betätigungselement wird auf das mindestens eine Riegelelement unter Überwindung der Vorspannung des Federelementes übertragen, so dass durch die Betätigung des Schieberelementes ein Entriegelungszustand bewirkbar ist, in dem das mindestens eine Riegelelement nicht mehr in den Verriegelungsausschnitt der Unterschiene eingreift.

Vorteilhaft ist vorgesehen, dass mindestens einer, der in den seitlichen Profilen der Oberschiene angeordneten mehreren Führungsausschnitte in je einem Führungskamm der Oberschiene, konisch ausgebildet ist.

Dadurch fahren im Verriegelungszustand beidseitig jeweils mindestens zwei endseitige Nasen mindestens eines der mehreren Riegelelemente in den schmaleren Konusbereich ein, wodurch die Nasen mindestens eines Riegelelementes im Verriegelungszustand in vorteilhafter Weise im Wesentlichen spielfrei in dem mindestens einen konischen Führungsausschnitt der Führungskämme einliegen, während die Nasen der mehreren Riegelelemente in vorteilhafter Weise zudem mit den Verriegelungszähnen in den Kontaktbereichen spielfrei kontaktieren. Eine bevorzugte Ausgestaltung wird vorgesehen, bei der mindestens jeder zweite, der in den seitlichen Profilen der Oberschiene angeordneten mehreren Führungsausschnitte in je einem Führungskamm der Oberschiene, konisch ausgebildet sind.

Die Erfindung wird nachfolgend anhand der zugehörigen Zeichnungen unter Erläuterung einer Ausführungsvariante näher erläutert. Es zeigen:
- Figur 1: einen Fahrzeugsitz in einer perspektivischen Darstellung mit einem Sitzschienenpaar; Baisvariante
- Figur 2: die Oberschiene gemäß Figur 1 in einer perspektivischen Darstellung, in der die Unterseite der Oberschiene gezeigt ist;
- Figur 3: die Oberschiene gemäß Figur 1 in einer perspektivischen Darstellung, in der die Oberseite der Oberschiene gezeigt ist;
- Figur 4: ein Verriegelungselement in einer Art perspektivischen Explosionsdarstellung;
- Figur 5: die Sitzschiene aus Oberschiene und Unterschiene in einer perspektivischen Darstellung schräg von unten, wobei eines der seitlichen Profile der Oberschiene und ein Gehäuse des Verriegelungselementes im Verriegelungsbereich weggelassen sind;
- Figur 6: die Sitzschiene aus Oberschiene und Unterschiene in einer Seitenansicht wobei wiederum das seitliche Profil der Oberschiene und ein Gehäuse des Verriegelungselementes im Verriegelungsbereich weggelassen sind;
- Figur 7A: eine schematisierte vereinfachte Darstellung des Verriegelungselementes in der Basisvariante;
- Figur 7B: eine schematisierte vereinfachte Darstellung der in die Unterschiene eingreifenden Nase der Riegelelemente des Verriegelungselementes der Oberschiene in der Basisvariante; Ausführungsvariante der vorliegenden Erfindung:
- Figur 8A: eine schematisierte vereinfachte Darstellung des Verriegelungselementes in einer gegenüber der Basisvariante festeren Ausführungsvariante der vorliegenden Erfindung mit unveränderter Inkrementierung
- Figur 8B: eine schematisierte vereinfachte Darstellung der in die Unterschiene eingreifenden Nasen der Riegelelemente des Verriegelungselementes der Oberschiene in der festeren Ausführungsvariante der vorliegenden Erfindung gemäß Figur 8A; Dritte Variante:
- Figur 9A: eine schematisierte vereinfachte Darstellung des Verriegelungselementes in einer gegenüber der Basisvariante kompakteren alternativen Variante mit unveränderter Inkrementierung;
- Figur 9B: eine schematisierte vereinfachte Darstellung der in die Unterschiene eingreifenden Nase der Riegelelemente des Verriegelungselementes der Oberschiene in der kompakteren alternativen Variante gemäß Figur 9A; Vierte Variante:
- Figur 10A: eine schematisierte vereinfachte Darstellung des Verriegelungselementes in einer gegenüber der Basisvariante festeren alternativen Variante mit veränderter Inkrementierung;
- Figur 10B: eine schematisierte vereinfachte Darstellung der in die Unterschiene eingreifenden Nase der Riegelelemente des Verriegelungselementes der Oberschiene in der festeren alternativen Variante gemäß Figur 10A.

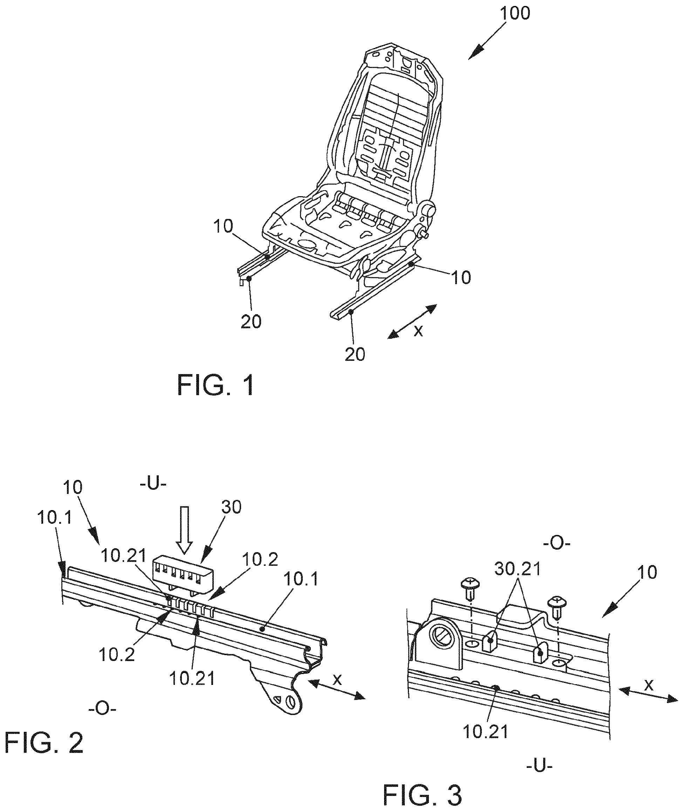

Figur 1 zeigt einen Fahrzeugsitz 100 mit einem Sitzschienenpaar, wobei jede Sitzschiene eine Oberschiene 10 und eine Unterschiene 20 aufweist.

Die Erfindung wird anhand einer Sitzschiene erläutert.

Die Figur 2 zeigt die Oberschiene 10 gemäß Figur 1 in einer perspektivischen Darstellung, in der die Unterseite - U - der Oberschiene 10 - gezeigt ist. Die Figur 2 verdeutlicht, dass auf den gegenüberliegenden Innenseiten 10.1 der Oberschiene 10 Führungskämme 10.2 mit nutartigen Führungsausschnitten 10.21 angeordnet sind. Die Führungsausschnitte 10.21 sind orthogonal zur Längsrichtung der Oberschiene 10 in den seitlichen Profilen, der insgesamt als C-Kontur ausgebildeten Oberschiene 10 aus Basisprofil und seitlichen Profilen angeordnet.

Die Führungskämme 10.2 sind nur in einem vorgebbaren Bereich der Oberschiene 10 angeordnet. Die Länge des Bereiches hängt von der Anzahl der benötigten Führungsausschnitte 10.21 ab.

Erfindungsgemäß wird in diesem Bereich ein Verriegelungselement 30 angeordnet und wie mit dem in Figur 2 gezeigten Pfeil in der Oberschiene 10 befestigt.

Die Figur 3 zeigt die Oberschiene in einer perspektivischen Darstellung von ihrer Oberseite, das heißt, die Oberschiene ist gegenüber der Figur 2 um 180° Grad gedreht dargestellt.

In Figur 3 ist genau der Bereich dargestellt, in dem das Verriegelungselement 30 im Beispiel durch Verschrauben von der Oberseite - O - der Oberschiene 10 aus in der Oberschiene 10 ortsfest befestigt ist.

In Figur 3 ist erkennbar, dass orthogonal abgehende Stege 30.21 eines Schieberelementes 30.2 des Verriegelungselementes 30 die Struktur der Oberschiene 10 zwischen den seitlichen Profilen in dafür vorgesehenen Öffnungen durchgreifen.

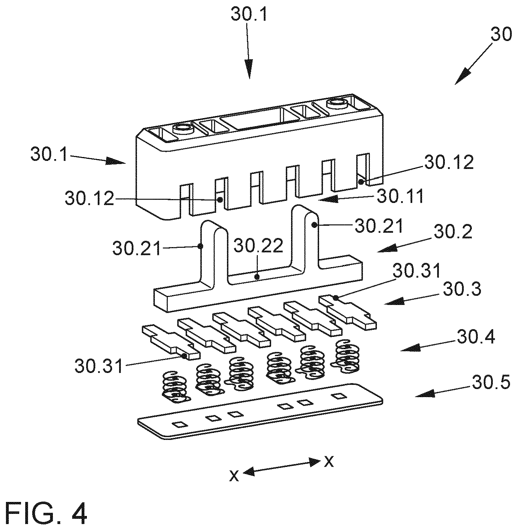

Das Verriegelungselement 30 ist in Figur 4 gezeigt und stellt ein Zusammenbauteil dar, welches nach dem Zusammenbau, wie in Figur 2 gezeigt, in der Oberschiene 10 montiert wird.

Figur 4 zeigt das Verriegelungselement 30 in einer Art perspektivischen Explosionsdarstellung vor dem Zusammenbau. Das Verriegelungselement 30 umfasst ein Gehäuseoberteil 30.1, das Schieberelement 30.2, Riegelelemente 30.3, Federelemente 30.4 und ein Gehäuseunterteil 30.5.

Wie bereits erläutert, weist das Schieberelement Stege 30.21 auf, die orthogonal von einem Basissteg 30.22 abgehend angeordnet sind. Unterhalb des Basissteges 30.22 sind Riegelelemente 30.3 angeordnet, die als plattenartige Strukturen ausgebildet sind, wobei der mittlere Bereich der Riegelelemente 30.3 unterhalb des Basissteges 30.22 und oberhalb der Federelemente 30.4 verdickt ausgeführt ist, so dass sich großflächigere Anlageflächen für die Federelemente 30.4 und den Basissteg 30.22 bilden.

Die Riegelelemente 30.3 weisen beidseitig Nasen 30.31 (nur zwei Nasen aus Übersichtlichkeitsgründen mit Bezugszeichen gekennzeichnet) auf, deren Breite quer zur Längsrichtung der Riegelelemente 30.3 gesehen im Wesentlichen mit der Breite der im Gehäuseoberteil 30.1 ausgebildeten nutartigen Führungsausschnitte 30.12 Gehäuseoberteilkämme 30.11 korrespondiert.

Die Breite quer zur Längsrichtung der Riegelelemente 30.3 gesehen korrespondiert im Übrigen auch mit der Breite der in den Figuren 2 und 3 gezeigten Führungsausschnitte 10.21.

Die Federelemente 30.4 stützen sich im Zusammenbauzustand an den Riegelelementen 30.3 und dem deckelartigen Gehäuseunterteil 30.5 ab.

Im Zusammenbauzustand wird dafür gesorgt, dass die Federelemente 30.4 unter Vorspannung im Gehäuse 30 angeordnet sind, so dass stets ein Verriegelungszustand I der Oberschiene 10 gegenüber der Unterschiene 20, wie noch erläutert wird, bewirkt ist.

Im Zusammenbauzustand liegen die Nasen 30.31 in den nutartigen Führungsausschnitten 30.12 der Gehäuseoberteilkämme 30.11 beweglich ein. Durch eine Verstellbewegung der Riegelelemente 30.3, rücken die Nasen 30.31 von dem Verriegelungszustand I ausgehend aus den Verriegelungsausschnitten 20.11 der Unterschiene 20 aus, so dass ein Entriegelungszustand II bewirkbar ist, wie anhand der weiteren Figuren noch erläutert wird.

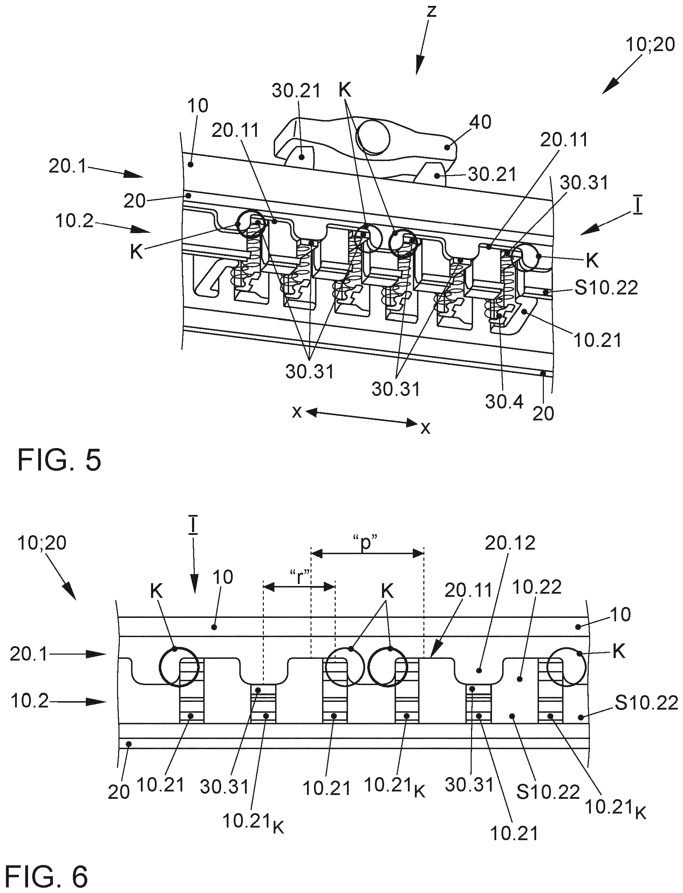

Die Figur 5 zeigt die Sitzschiene aus Oberschiene 10 und Unterschiene 20 in einer perspektivischen Darstellung schräg von unten, wobei eines der seitlichen Profile der Oberschiene 10 im Verriegelungsbereich und die Gehäuseteile 30.1 und 30.5 des Verriegelungselementes 30 im Verriegelungsbereich weggelassen sind.

In Figur 5 sind somit die Schnittkanten S10.22 der Führungszähne 10.22 des Führungskammes 10.2 der Oberschiene 10 dargestellt.

Bei dieser Variante, sind die Stege 30.21, welche die Oberschiene 10 durchgreifen mit einem Betätigungselement 40 gekoppelt, welches bei einer Entriegelungsbetätigung (die in Figur 5 noch nicht erfolgt ist) quer zur Längsrichtung in z-Richtung gemäß dem in Figur 5 dargestellten Pfeil auf beide Stege 30.21 einwirkt, wodurch das Basiselement 30.2 gegen die Federkraft der Federelemente 30.4 auf die Riegelelemente 30.3 einwirkt, deren Nasen 30.31 dann aus den Verriegelungsausschnitten 20.11 der Unterschiene 20 ausrücken, so dass ausgehend von dem gezeigten Verriegelungszustand I ein (nicht gezeigter ) Entriegelungszustand II bewirkt werden kann.

Die Figur 6 zeigt die Sitzschiene aus Oberschiene 10 und Unterschiene 20 in einer Seitenansicht wobei wiederum das seitliche Profil der Oberschiene und ein Gehäuse des Verriegelungselementes im Verriegelungsbereich weggelassen sind.

In einer Zusammenschau der Figuren 5 und 6 wird ein weiterer Aspekt der Erfindung erläutert. Analog zu dem Führungskamm 10.2 der Oberschiene 10 weist die Unterschiene 20 gegenüberliegende Verriegelungskämme 20.1 auf, die aus Verriegelungsausschnitten 20.11 und Verriegelungszähnen 20.12 gebildet ist.

Der Führungskamm 10.2 weist ebenfalls die Führungsausschnitte 10.21 und die Führungszähne 10.22 auf, deren Schnittkanten S10.22 in Figur 5 und in Figur 6 dargestellt sind.

Aus den Figuren 5 und 6 wird ferner in Zusammenschau mit der Figur 4 deutlich, dass das Verriegelungselement 30 eine bestimmte vorgebbare Anzahl n von Riegelelementen 30.2 aufweist.

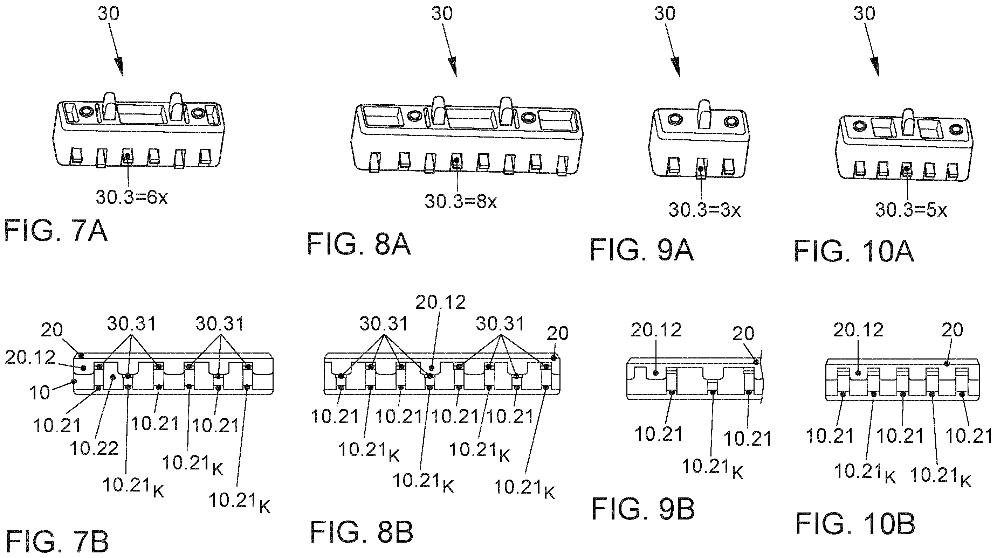

In der in den Figuren 1 bis 6 (vergleiche auch Figuren 7A und 7B) dargestellten Basisvariante, weist das Verriegelungselement 30 sechs (n = 6) Riegelelemente 30.2 auf. In den Figuren 5 und 6 ist erkennbar, dass bei der Basisvariante vier von sechs Riegelelementen 30.2 mit ihren Nasen 30.31 in die Verriegelungsausschnitte 20.11 der Unterschiene 20 eingreifen. Zwei von sechs Riegelelementen 30.2 liegen an den Stirnseiten der Verriegelungszähne 20.12 der Verriegelungskämme 20.1 an und sind somit an der Verrastung der Oberschiene 10 gegenüber der Unterschiene 20 nicht beteiligt. Diese Ausgestaltung stellt jedoch keinen Nachteil, sondern eher einen Vorteil dar, der nachfolgend noch erläutert wird.

Die vier von sechs Riegelelemente 30.2, die mit ihren Nasen 30.31 in die Verriegelungsausschnitte 20.11 der Unterschiene 20 eingreifen, bilden an den seitlichen Flanken der Verriegelungszähne 20.12 der Verriegelungskämme 20.1 Kontaktbereiche K, die zur Verdeutlichung in den Figuren 5 und 6 mit Kreisen versehen sind. Es wird somit deutlich, dass (auf jeder Seite der Sitzschiene stets zwei Riegelelemente 30.2 mit ihren Nasen 30.31 stets zwei unterschiedliche Verriegelungszähne 20.12 Verriegelungskämme 20.1 kontaktieren und somit eine sichere(re) Verrastung in die eine oder andere Richtung beziehungsweise nach vorn und hinten gewährleisten.

In Figur 6 ist zusätzlich eine Inkrementierung der Basisvariante dargestellt. Als Inkrement "t" wird der kleinste Abstand zweier benachbarter, unterschiedlicher Rastpositionen bezeichnet. Das Periodenmaß "p" (in x-Richtung) entspricht dem Abstand zweier gleichartiger Verriegelungsausschnitte 20.11 in den Verriegelungskämmen 20.1.

Das Periodenmaß "r" (in x-Richtung) entspricht dem Abstand zweier gleichartiger Nasen 30.31 der Riegelelemente 30.3. Es gilt, dass das Inkrement "t" gleich der kleinste Abstand zweier benachbarter, unterschiedlicher Rastpositionen r-p ist.

Das Verriegelungselement 30 weist in der Basisvariante mehrere, nämlich sechs (n = 6) unabhängig voneinander angeordnete baugleiche Riegelelemente 30.3 auf, von denen vier(n = 4) durch die enge Inkrementierung "t" im Verriegelungszustand I in ihren Rastpositionen in dem Verriegelungsausschnitt 20.11 angeordnet sind, wobei auf jeder Seite je zwei (n = 2) Nasen 30.31 der Riegelelemente 30.3 in die eine und oder andere Richtung Kontaktbereiche K mit den Verriegelungszähnen 20.12 bilden.

In der Basisvariante sind durch den geringen Abstand der Nasen 30.31 der Riegelelemente 30.3 gemäß dem Periodenmaß "r" zwar zwei Riegelelemente 30.3 nicht im Eingriff, jedoch wird dadurch bei einer geringen Verschiebung der Oberschiene 10 zur Unterschiene 20 bereits gemäß der Inkrementierung eine erneute Rastposition gefunden.

Das in der Basisvariante realisierte Inkrement "t" beträgt in vorteilhafter Weise nur 6 mm.

Ferner wird noch dafür gesorgt, dass im Verriegelungszustand I eine spielfreie Verrastung gewährleistet ist. Dazu wird mindestens ein Paar gegenüberliegender nutartiger Führungsausschnitte 10.21 in dem Führungskamm 10.2 in z-Richtung konisch ausgebildet, so dass die Nasen 30.31 mindestens eines Riegelelementes 30.3 beidseitig im Verriegelungszustand I in den konischen Führungsausschnitten 10.21 einliegen, wodurch die Oberschiene 10 über das Verriegelungselement 30 gegenüber der Unterschiene 20 über die Führungsausschnitte 10.21 und den Kontaktbereich K zu den Verriegelungszähnen 20.12 der Verriegelungskämme 20.2 mit geringem Spiel klapperfrei zueinander angeordnet sind.

Im Ausführungsbeispiel ist vorgesehen, dass jeder zweite Führungsausschnitt 10.21 konisch ausgebildet ist. Diese konische Ausgestaltung ist ausschließlich in Figur 6 mit dem Bezugszeichen 10.21_{K} gekennzeichnet.

Für die nachfolgenden Figuren gilt, dass die Varianten nicht maßstäblich dargestellt sind, so dass das Grundprinzip der Erfindung bezüglich der erläuterten Maße der Varianten verdeutlicht wird.

In der Figur 7A ist das Verriegelungselement 30 in der Basisvariante und in Figur 7B ist die Oberschiene 10 und die Unterschiene 20 schematisch analog zu den Figuren 5 und 6 dargestellt.

Die Figur 8A zeigt eine schematisierte vereinfachte Darstellung des Verriegelungselementes 30 in einer gegenüber der Basisvariante festeren Ausführungsvariante nach der vorliegenden Erfindung mit unveränderter Inkrementierung t.

Die Figur 8B zeigt eine schematisierte vereinfachte Darstellung der in die Unterschiene 20 eingreifenden Nasen 30.31 der Riegelelemente 30.3 des Verriegelungselementes 30 der Oberschiene 10 in der festeren Ausführungsvariante der vorliegenden Erfindung gemäß Figur 8A.

Das Verriegelungselement 30 weist in der festeren Ausführungsvariante der vorliegenden Erfindung mehrere, nämlich acht (n = 8) unabhängig voneinander angeordnete baugleiche Riegelelemente 30.3 auf, von denen fünf (n = 5) durch die enge Inkrementierung "t" im Verriegelungszustand I in ihren Rastpositionen in den Verriegelungsausschnitten 20.11 angeordnet sind, wobei auf jeder Seite je zwei (n = 2) Nasen 30.31 der Riegelelemente 30.3 in die eine und auf jeder Seite je drei (n = 3) Nasen 30.31 der Riegelelemente 30.3 in die andere Richtung Kontaktbereiche K mit den Verriegelungszähnen 20.12 bilden. Das in der Basisvariante realisierte Inkrement "t" beträgt in vorteilhafter Weise nur 6 mm.

Die Figur 9A zeigt eine schematisierte vereinfachte Darstellung des Verriegelungselementes 30

in einer gegenüber der Basisvariante kompakteren alternativen Variante mit unveränderter Inkrementierung t.

Die Figur 9B zeigt eine schematisierte vereinfachte Darstellung der in die Unterschiene 20 eingreifenden Nasen 30.31 der Riegelelemente 30.3 des Verriegelungselementes 30 der Oberschiene 10 in der kompakteren alternativen Variante gemäß Figur 9A.

Das Verriegelungselement 30 weist in kompakteren alternativen Ausführungsvarianten mehrere, nämlich drei (n = 3) unabhängig voneinander angeordnete baugleiche Riegelelemente 30.3 auf, von denen zwei (n = 2) durch die enge Inkrementierung "t" im Verriegelungszustand I in ihren Rastpositionen in den Verriegelungsausschnitten 20.11 angeordnet sind, wobei auf jeder Seite je eine (n = 1) Nase 30.31 der Riegelelemente 30.3 in die eine und auf jeder Seite je eine (n = 1) Nase 30.31 der Riegelelemente 30.3 in die andere Richtung Kontaktbereiche K mit zwei Verriegelungszähnen 20.12 bilden. Das in der Basis-Ausführungsvariante realisierte Inkrement "t" beträgt in vorteilhafter Weise ebenfalls nur 6 mm.

Die Figur 10A zeigt eine schematisierte vereinfachte Darstellung des Verriegelungselementes 30 in einer gegenüber der Basisvariante festeren alternativen Variante mit veränderter Inkrementierung t.

Die Figur 10B zeigt eine schematisierte vereinfachte Darstellung der in die Unterschiene 20 eingreifenden Nasen 30.31 der Riegelelemente 30.3 des Verriegelungselementes 30 der Oberschiene 10 in der festeren alternativen Variante gemäß Figur 10A.

Das Verriegelungselement 30 weist in festeren alternativen Variante mehrere, nämlich fünf (n = 5) unabhängig voneinander angeordnete baugleiche Riegelelemente 30.3 auf, von denen alle fünf (n = 5) durch die weniger enge Inkrementierung "t" im Verriegelungszustand I in ihren Rastpositionen in den Verriegelungsausschnitten 20.11 angeordnet sind, wobei auf jeder Seite fünf (n = 5) Nasen 30.31 der Riegelelemente 30.3 in die eine und auf jeder Seite je fünf (n = 5) Nasen 30.31 der Riegelelemente 30.3 in die andere Richtung beidseitig Kontaktbereiche K mit den Verriegelungszähnen 20.12 bilden. Das in der Basisvariante realisierte Inkrement "t" beträgt in dieser Variante t = 10mm, wodurch alle Riegelelemente 30.3 in den Verriegelungsausschnitten 20.11 durch entsprechend angepasste Periodenmaße "r" und "p" in den Eingriff kommen.

### Bezugszeichenliste

- 100: Fahrzeugsitz
- 10: Oberschiene
- 10.1: Innenseite
- 10.2: Führungskamm
- 10.21: Führungsausschnitt
- 10.21_{K}: konische Führungssauschnitte
- 10.22: Führungszahn
- S10.22: Schnittkante eines Führungszahns
- 20: Unterschiene
- 20.1: Verriegelungskamm
- 20.11: Verriegelungsausschnitt
- 20.12: Verriegelungszahn
- 30: Verriegelungselement
- 30.1: Gehäuseoberteil
- 30.11: Gehäuseoberteilkamm
- 30.12: Führungsausschnitt
- 30.2: Schieberelement
- 30.21: Steg
- 30.22: Basissteg
- 30.3: Riegelelement
- 30.31: Nase
- 30.4: Federelement
- 30.5: Gehäuseunterteil
- 40: Betätigungselement
- I: Verriegelungszustand
- II: Entriegelungszustand
- U O: Unterseite Oberseite
- C: Kontaktbereich
- t: Inkrement
- p: Periodenmaß der Verriegelungsausschnitte 20.11
- r: Periodenmaß der Riegelelemente 30.3
- x: Längsrichtung einer Sitzschiene
- z: vertikale Richtung orthogonal zur Längsrichtung x

## Patentansprüche

1. Verriegelungsmechanismus einer Sitzschiene umfassend eine Oberschiene (10) und eine Unterschiene (20) sowie ein Verriegelungselement (30), welches in einem Verriegelungszustand (I) für eine reversible Verriegelung der Sitzschiene sorgt, wobei das Verriegelungselement (30) ein Gehäuse aufweist, das in der Oberschiene (10) ortsfest angeordnet und mit der Oberschiene (10) verbunden ist, wobei in dem Gehäuse unabhängig voneinander mehrere bewegliche als plattenartige Strukturen ausgebildete baugleiche Riegelelemente (30.3) mit je zwei endseitigen Nasen (30.31) und mehrere Federelemente (30.3) integriert angeordnet sind,
**dadurch gekennzeichnet, dass**
- die zwei endseitigen Nasen (30.31) der beweglichen Riegelelemente (30.3) in Gehäuseoberteilkämmen (30.11) eines Gehäuseoberteiles (30.1) angeordnete nutartige Führungsausschnitte (30.12) beidseitig durchgreifen, wobei die endseitigen Nasen (30.31) der Riegelelemente (30.3) im Verriegelungszustand (I) beidseitig in Verriegelungsausschnitte (20.11) von Verriegelungskämmen (20.1) der Unterschiene (20) eingreifen, die aus den Verriegelungsausschnitten (20.11) und Verriegelungszähnen (20.12) ausgebildet sind,
- wobei die Oberschiene (10) ein Basisprofil und seitliche Profile aufweist, die einen Hohlraum zur Anordnung des Verriegelungselementes (30) in der Oberschiene (10) bilden, wobei die seitlichen Profile der Oberschiene (10) mehrere Führungsausschnitte (10.21) je eines Führungskamms (10.2) zur Führung der beweglichen Riegelelemente (30.3) aufweisen, wobei die in Richtung der seitlichen Profile der Oberschiene (10) herausragenden endseitigen Nasen (30.31) die beidseitig angeordneten nutartigen Führungsausschnitte (30.12) der Gehäuseoberteilkämme (30.11) und anschließend die beidseitig angeordneten Führungsausschnitte (10.21) der Führungskämme (10.2) der Oberschiene (10) beidseitig durchgreifen und im Verriegelungszustand (I) in die beidseitig angeordneten Verriegelungsausschnitte (20.11) der Unterschiene (20) eingreifen oder an den Stirnseiten der Verriegelungszähne (20.12) der Unterschiene (20) anliegen,
- wobei die mehreren Riegelelemente (30.3) im Verriegelungszustand (I) durch die Kraft der den Riegelelementen (30.3) zugeordneten vorgespannten mehreren Federelemente (30.4), welche ebenfalls in dem Gehäuse integriert angeordnet sind, und sich im Zusammenbauzustand an den Riegelelementen (30.3) und einem deckelartigen Gehäuseunterteil (30.5) abstützen, reversibel in den Verriegelungsausschnitten (20.11) der Unterschiene (20) eingreifend gehalten sind,
- wobei für den Verriegelungszustand (I) ein Inkrement "t" definiert ist, das den kleinsten Abstand zweier benachbarter, unterschiedlicher Rastpositionen bezeichnet, wobei ein Periodenmaß "p" dem Abstand zweier gleichartiger Verriegelungsausschnitte (20.11) in den Verriegelungskämmen (20.1) entspricht, und ein Periodenmaß "r", dem Abstand zweier gleichartiger endseitiger Nasen (30.31) der mehreren Riegelelemente (30.3) entspricht, wobei das Inkrement "t" und die Anzahl (n) der Riegelelemente (30.3) derart gewählt sind, sodass acht (n = 8) Riegelelemente (30.3) auf jeder Seite der Sitzschiene angeordnet sind, von denen fünf (n = 5) in ihren Rastpositionen in den Verriegelungsausschnitten (20.11) angeordnet sind, wobei auf jeder Seite der Sitzschiene zwei (n = 2) endseitige Nasen (30.31) der Riegelelemente (30.3) in die eine und auf jeder Seite der Sitzschiene drei (n = 3) endseitige Nasen (30.31) der Riegelelemente (30.3) in die andere Richtung seitliche Kontaktbereiche (K) mit den Verriegelungszähnen (20.12) der Unterschiene (20) bilden, wobei auf jeder Seite der Sitzschiene drei (n = 3) endseitige Nasen (30.31) im Verriegelungszustand (I) an den Stirnseiten der Verriegelungszähne (20.12) der Verriegelungskämme (20.1) anliegen.

2. Verriegelungsmechanismus nach Anspruch 1, **dadurch gekennzeichnet, dass** in das Gehäuse ein Schieberelement (30.2) integriert angeordnet ist, welches mit mindestens einem außerhalb des Gehäuses angeordneten Betätigungselement (40) der Sitzschiene in Verbindung steht, wobei eine Betätigung des Schieberelementes (30.2) durch das Betätigungselement (40) auf die Riegelelemente (30.3) unter Überwindung der Vorspannung der Federelemente (30.4) übertragen wird, so dass durch die Betätigung des Schieberelementes (30.2) ein Entriegelungszustand (II) bewirkbar ist, in dem die Riegelelemente (30.3) nicht mehr in den Verriegelungsausschnitt (20.11) der Unterschiene (20) eingreifen.

3. Verriegelungsmechanismus nach Anspruch 1, **dadurch gekennzeichnet, dass** mindestens einer der in den seitlichen Profilen der Oberschiene (10) angeordneten mehreren Führungsausschnitte (10.21_{K}) in je einem Führungskamm (10.2) der Oberschiene (10) konisch ausgebildet ist, so dass endseitige Nasen (30.31) der mehreren Riegelelemente (30.3) im Verriegelungszustand (I) beidseitig in einen schmaleren Konusbereich einfahren, wodurch die endseitigen Nasen (30.31) der Riegelelemente (30.3) im Verriegelungszustand (I) spielfrei in dem mindestens einen konischen Führungsausschnitt (10.21_{K}) der Führungskämme (10.2) einliegen, während die endseitigen Nasen (30.31) der Riegelelemente (30.3) mit den Verriegelungszähnen (20.12) in den seitlichen Kontaktbereichen (K) spielfrei kontaktieren.

4. Verriegelungsmechanismus nach Anspruch 3, **dadurch gekennzeichnet, dass** mindestens jeder zweite Führungsausschnitt (10.21_{K}) in je einem Führungskamm (10.2) der Oberschiene (10) konisch ausgebildet ist.

5. Verriegelungsmechanismus nach Anspruch 2, **dadurch gekennzeichnet, dass** die Riegelelemente (30.3) unterhalb eines Basissteges (30.22) des Schieberelements (30.2) angeordnet sind, und der mittlere Bereich der Riegelelemente (30.3) unterhalb des Basissteges (30.22) und oberhalb der Federelemente (30.4) verdickt ausgeführt ist, so dass großflächigere Anlageflächen für die Federelemente (30.4) und den Basissteg (30.22) ausgebildet sind.

6. Verriegelungsmechanismus nach Anspruch 1, **dadurch gekennzeichnet, dass** eine Breite der zwei endseitigen Nasen (30.31) der Riegelelemente (30.3) quer zur Längsrichtung der Riegelelemente (30.3) gesehen im Wesentlichen mit einer Breite der im Gehäuseoberteil (30.1) ausgebildeten nutartigen Führungsausschnitte (30.12) der Gehäuseoberteilkämme (30.11) des Gehäuseoberteiles (30.1) und mit einer Breite der Führungsausschnitte (10.21) der Führungskämme (10.2) der Oberschiene (10) korrespondiert.

## Claims

1. A locking mechanism of a seat rail comprising a top rail (10) and a bottom rail (20) as well as a locking element (30) which, in a locking state (I), ensures a reversible locking of the seat rail, wherein the locking element (30) has a housing which is arranged in a stationary manner in the top rail (10) and is connected to the top rail (10), wherein multiple locking bolt elements (30.3) of identical construction, which can be moved independently of one another and are formed as plate-like structures with two end lugs (30.31) each, and multiple spring elements (30.4) are arranged integrated in the housing,
**characterized in that**
- the two end lugs (30.31) of the movable locking bolt elements (30.3) extend through groove-like guiding recesses (30.12) arranged in housing top part combs (30.11) of a housing top part (30.1) on both sides, wherein the end lugs (30.31) of the locking bolt elements (30.3), in the locking state (I), engage in locking recesses (20.11) of locking combs (20.1) of the bottom rail (20), which are formed from the locking recesses (20.11) and locking teeth (20.12), on both sides,
- wherein the top rail (10) has a base profile and lateral profiles which form a cavity for arranging the locking element (30) in the top rail (10), wherein the lateral profiles of the top rail (10) have multiple guiding recesses (10.21) each of a guiding comb (10.2) for guiding the movable locking bolt elements (30.3), wherein the end lugs (30.31) projecting in the direction of the lateral profiles of the top rail (10) extend through the groove-like guiding recesses (30.12) of the housing top part combs (30.11), which are arranged on both sides, and subsequently extend through the guiding recesses (10.21) of the guiding combs (10.2) of the top rail (10), which are arranged on both sides and, in the locking state (I), engage in the locking recesses (20.11) of the bottom rail (20), which are arranged on both sides, or lie in contact with the faces of the locking teeth (20.12) of the bottom rail (20),
- wherein, in the locking state (I), the multiple locking bolt elements (30.3) are held reversibly engaging in the locking recesses (20.11) of the bottom rail (20) by the force of the biased multiple spring elements (30.4) which are assigned to the locking bolt elements (30.3), which are likewise arranged integrated in the housing, and, in the assembly state, are supported on the locking bar elements (30.3) and a lid-like housing bottom part (30.5),
- wherein an increment "t" is defined for the locking state (I), which designates the smallest distance between two neighboring different latching positions, wherein a period dimension "p" corresponds to the distance between two similar locking recesses (20.11) in the locking combs (20.1), and a period dimension "r", corresponds to the distance between two similar end lugs (30.31) of the multiple locking bolt elements (30.3), wherein the increment "t" and the number (n) of the locking bolt elements (30.3) are selected in such a way that eight (n = 8) locking bolt elements (30.3) are arranged on each side of the seat rail, five (n = 5) of which are arranged in their latching positions in the locking recesses (20.11), wherein, on each side of the seat rail, two (n = 2) end lugs (30.31) of the locking bolt elements (30.3) in the one direction and on each side of the seat rail three (n = 3) end lugs (30.31) of the locking bolt elements (30.3) in the other direction form lateral contact regions (K) with the locking teeth (20.12) of the bottom rail (20), wherein three (n = 3) end lugs (30.31) lie, in the locking state (I), in contact with the end faces of the locking teeth (20.12) of the locking combs (20.1) on each side of the seat rail.

2. The locking mechanism according to Claim 1, **characterized in that** a slide element (30.2) is arranged integrated into the housing, which is connected to at least one actuating element (40) of the seat rail, which is arranged outside the housing, wherein an actuation of the slide element (30.2) is transmitted by the actuating element (40) to the locking bolt elements (30.3) by overcoming the bias of the spring elements (30.4) so that by the actuation of the slide element (30.2) an unlocking state (II) can be brought about, in which the locking bolt elements (30.3) no longer engage in the locking recess (20.11) of the bottom rail (20).

3. The locking mechanism according to Claim 1, **characterized in that** at least one of the multiple guiding recesses (10.21_{K}) arranged in the lateral profiles of the top rail (10) is formed conically in one guiding comb (10.2) each of the top rail (10) so that, in the locking state (I), end lugs (30.31) of the multiple locking bolt elements (30.3) retract into a narrower conical region on both sides, as a result of which the end lugs (30.31) of the locking bolt elements (30.3) in the locking state (I) are enclosed without play in the at least one conical guiding recess (10.21_{K}) of the guiding combs (10.2), while the end lugs (30.31) of the locking bolt elements (30.3) contact the locking teeth (20.12) in the lateral contact regions (K) without play.

4. The locking mechanism according to Claim 3,
**characterized in that** at least every second guiding recess (10.21_{K}) is formed conically in one guiding comb (10.2) each of the top rail (10).

5. The locking mechanism according to Claim 2,
**characterized in that** the locking bolt elements (30.3) are arranged below a base web (30.22) of the slide element (30.2), and the central region of the locking bolt elements (30.3) is executed in a thickened manner below the base web (30.22) and above the spring elements (30.4), so that more extensive contact surfaces are formed for the spring elements (30.4) and the base web (30.22).

6. The locking mechanism according to Claim 1, **characterized in that** a width of the two end lugs (30.31) of the locking bolt elements (30.3), viewed transversely to the longitudinal direction of the locking bolt elements (30.3), substantially corresponds to a width of the groove-like guiding recesses (30.12) of the housing top part combs (30.11) of the housing top part (30.1), which are formed in the housing top part (30.1), and corresponds to a width of the guiding recesses (10.21) of the guiding combs (10.2) of the top rail (10).

## Revendications

1. Mécanisme de verrouillage d'un rail de siège comprenant un rail supérieur (10) et un rail inférieur (20) ainsi qu'un élément de verrouillage (30) qui engendre, à un état de verrouillage (I), un verrouillage réversible du rail de siège, l'élément de verrouillage (30) comportant un boîtier, qui est disposé fixe dans le rail supérieur (10) et qui est relié au rail supérieur (10), plusieurs éléments de verrou (30.3) de construction identique, mobiles et réalisés sous la forme de structures en forme de plaque, dotés chacun de deux nez d'extrémité (30.31) et de plusieurs éléments ressorts (30.4), étant disposés intégrés indépendamment les uns des autres dans le boîtier,
**caractérisé en ce que**
- les deux nez d'extrémité (30.31) des éléments de verrou (30.3) mobiles passent des deux côtés à travers des crans de guidage (30.12) en forme de rainure disposés dans des peignes de partie supérieure de boîtier (30.11) d'une partie supérieure de boîtier (30.1), les nez d'extrémité (30.31) des éléments de verrou (30.3), à l'état de verrouillage (I), venant en prise des deux côtés dans des crans de verrouillage (20.11) de peignes de verrouillage (20.1) du rail inférieur (20), lesquels sont formés par les crans de verrouillage (20.11) et des dents de verrouillage (20.12),
- dans lequel le rail supérieur (10) comporte un profil de base et des profils latéraux qui forment une cavité pour disposer l'élément de verrouillage (30) dans le rail supérieur (10), les profils latéraux du rail supérieur (10) comportant plusieurs crans de guidage (10.21) d'un peigne de guidage (10.2) respectif pour le guidage des éléments de verrou (30.3) mobiles, les nez d'extrémité (30.31) qui font saillie en direction des profils latéraux du rail supérieur (10) passant des deux côtés à travers les crans de guidage (30.12), en forme de rainure et disposés des deux côtés, des peignes de partie supérieure de boîtier (30.11) et ensuite à travers les crans de guidage (10.21), disposés des deux côtés, des peignes de guidage (10.2) du rail supérieur (10) et, à l'état de verrouillage (I), étant en prise dans les crans de verrouillage (20.11) du rail inférieur (20) disposés des deux côtés ou étant en appui contre les faces frontales des dents de verrouillage (20.12) du rail inférieur (20),
- dans lequel, à l'état de verrouillage (I), les plusieurs éléments de verrou (30.3) sont maintenus en prise dans les crans de verrouillage (20.11) du rail inférieur (20) de manière réversible par la force des plusieurs éléments ressorts (30.4) précontraints associés aux éléments de verrou (30.3), qui sont également disposés intégrés dans le boîtier et qui s'appuient, à l'état assemblés, sur les éléments de verrou (30.3) et une partie inférieure de boîtier (30.5) en forme de couvercle,
- dans lequel un incrément « t » est défini pour l'état de verrouillage (I), qui désigne la plus petite distance entre deux positions d'arrêt différentes adjacentes, une mesure de période « p » correspondant à la distance entre deux crans de verrouillage (20.11) semblables dans les peignes de verrouillage (20.1), et une mesure de période « r » correspondant à la distance entre deux nez d'extrémité (30.31) semblables des plusieurs éléments de verrou (30.3), l'incrément « t » et le nombre (n) des éléments de verrou (30.3) étant choisis de telle manière que huit (n = 8) éléments de verrou (30.3) sont disposés de chaque côté du rail de siège, dont cinq (n = 5) sont disposés dans leur position d'arrêt dans les crans de verrouillage (20.11), deux (n = 2) nez d'extrémité (30.31) des éléments de verrou (30.3) de chaque côté du rail de siège dans une direction, et trois (n = 3) nez d'extrémité (30.31) des éléments de verrou (30.3) de chaque côté du rail de siège dans l'autre direction, formant des zones de contact (K) avec les dents de verrouillage (20.12) du rail inférieur (20), trois (n = 3) nez d'extrémité (30.31) étant, à l'état de verrouillage (1), en appui, de chaque côté du rail de siège, contre les faces frontales des dents de verrouillage (20.12) des peignes de verrouillage (20.1).

2. Mécanisme de verrouillage selon la revendication 1, **caractérisé en ce qu'**un élément coulissant (30.2) est disposé intégré dans le boîtier, ledit élément coulissant étant en liaison avec au moins un élément d'actionnement (40) du rail de siège, disposé en dehors du boîtier, un actionnement de l'élément coulissant (30.2) par l'élément d'actionnement (40) étant transmis aux éléments de verrou (30.3) en vainquant la précontrainte des éléments ressorts (30.4), de telle sorte que l'actionnement de l'élément coulissant (30.2) peut induire un état de déverrouillage (II), dans lequel les éléments de verrou (30.3) ne sont plus en prise dans le cran de verrouillage (20.11) du rail inférieur (20).

3. Mécanisme de verrouillage selon la revendication 1, **caractérisé en ce qu'**au moins un des plusieurs crans de guidage (10.21_{K}) disposés dans les profils latéraux du rail supérieur (10), dans chaque peigne de guidage (10.2) du rail supérieur (10), est réalisé de forme conique, de telle sorte que des nez d'extrémité (30.31) des plusieurs éléments de verrou (30.3) s'insèrent, à l'état de verrouillage (I), des deux côtés dans une zone conique plus étroite, moyennant quoi les nez d'extrémité (30.31) des éléments de verrou (30.3) se trouvent, à l'état de verrouillage (I), sans jeu dans l'au moins un crans de guidage (10.21_{K}) conique des peignes de guidage (10.2), tandis que les nez d'extrémité (30.31) des éléments de verrou (30.3) sont en contact sans jeu avec les dents de verrouillage (20.12) dans les zones de contact (K) latérales.

4. Mécanisme de verrouillage selon la revendication 3,
**caractérisé en ce qu'**au moins un cran de guidage (10.21_{K}) sur deux dans chaque peigne de guidage (10.2) du rail supérieur (10) est réalisé de forme conique.

5. Mécanisme de verrouillage selon la revendication 2,
**caractérisé en ce que** les éléments de verrou (30.3) sont disposés en dessous d'une barrette de base (30.22) de l'élément coulissant (30.2), et la zone centrale des éléments de verrou (30.3) est exécutée épaissie en dessous de la barrette de base (30.22) et au-dessus des éléments ressorts (30.4), de telle sorte que des surfaces d'appui de plus grande surface sont formées pour les éléments ressorts (30.4) et la barrette de base (30.22).

6. Mécanisme de verrouillage selon la revendication 1, **caractérisé en ce qu'**une largeur des deux nez d'extrémité (30.31) des éléments de verrou (30.3), vus transversalement à la direction longitudinale des éléments de verrou (30.3), correspond sensiblement à une largeur des crans de guidage (30.12), en forme de rainure réalisés dans la partie supérieure de boîtier (30.1), des peignes de partie supérieure de boîtier (30.11) de la partie supérieure de boîtier (30.1) et correspond à une largeur des crans de guidage (10.21) des peignes de guidage (10.2) du rail supérieur (10).
